# EUROPEAN PATENT APPLICATION

(11) **EP 2 256 539 A2**
(43) Date of publication of application: **01.12.2010**
(21) Application number: 10163429.3
(22) Date of filing: 20.05.2010
(51) Int. Cl.: G02F 1/13

(54) **Liquid crystal module**

(30) Priority: 25.05.2009 JP 2009125685
(71) Applicant: Funai Electric Co., Ltd., Daito-shi, Osaka 574-0013 (JP)
(72) Inventor: Ando, Satoshi, Daito-shi, Osaka 574-0013 (JP)
(74) Representative: Grünecker, Kinkeldey, Stockmair & Schwanhäusser Anwaltssozietät

(57) **Abstract**

A liquid crystal module is provided. A rectangular frame includes an upper bezel, a lower bezel, a left bezel and a right bezel which are coupled to each other and encloses four peripheral edges of a liquid crystal panel. A rib is disposed at a rear side of each coupling portion between adjacent bezels to prevent the adjacent bezels which are coupled to each other from falling down inwardly.

## Description

The disclosure of Japanese Patent Application No. 2009-125685 filed on May 25, 2009 including specification, drawings and claims is incorporated herein by reference in its entirety.

### BACKGROUND

The present invention relates to a liquid crystal module to be installed in an electronic device such as a television, a personal computer, or the like. More particularly, the present invention relates to a liquid crystal module in which a bump is not formed at each coupling portion of bezels of a frame enclosing a liquid crystal panel, thereby improving the quality of the liquid crystal module.

A related-art liquid crystal module includes a liquid crystal panel and a rectangular frame having upper and lower bezels and left and right bezels which are coupled to each other and enclosing four peripheral edges of the liquid crystal panel. In the related-art liquid crystal module, in order to prevent the four peripheral edges of the liquid crystal panel from being damaged by the bezels, a convex portion for preventing the bezels from falling down inwardly is provided on a cell guide or a lamp flame for each bezel.

Patent Document I discloses a liquid crystal display apparatus having a bezel in which two first support frames and two second support frames are connected to each other in the shape of a rectangular frame. In this liquid crystal display apparatus, a first connection convex portion and a second connection convex portion are formed on both end portions of the first support frame. A first through hole formed in the first connection convex portion is overlapped with third through holes formed in both end portions of the second support frame, a second through hole formed in the second connection convex portion is overlapped with fourth through holes formed in both end portions of the second support frame, and these holes are fastened to a first female hole and a second female hole of a rear frame with bolts, thereby preventing the bezel from deformation such as twisting or bending.

Patent Document 2 discloses a liquid crystal module in which a bezel is divided into two L-shaped members, an end portion of the respective L-shaped members is provided with a projecting piece, and two L-shaped members are formed into a rectangular frame shape by overlapping these projecting pieces with each other and screwing these projecting pieces to a frame with screws.
Patent Document 1: JP-A-2008-197166
Patent Document 2: JP-A-2006-350218

In the related-art liquid crystal module, the convex portions provided for each bezel are slightly different from each other in height. Therefore, in a case where deformation or distortion occurs in each bezel, a bump is formed at a coupling portion between adjacent bezel. It detracts from the external appearance of the bezels and deteriorates the quality of the bezels.

The liquid crystal display apparatus disclosed in Patent Document 1 can prevent the deformation of the bezel, such as twisting or bending, to improve the quality of the bezel. However, it requires two bolts to fasten each coupling portion between the first support frame and the second support frame to the rear frame. Therefore, the number of components of the liquid crystal display apparatus is increased and thus the manufacturing cost of the liquid crystal display apparatus is increased. In addition, since it requires operations to fasten the bolts, the workability in manufacturing the liquid crystal display apparatus is deteriorated.

The liquid crystal module disclosed in Patent Document 2 is not useful for solving the above-mentioned problem in the related-art liquid crystal module since two L-shaped members are framed in a rectangular shape to form the bezel.

### SUMMARY

It is therefore an object of at least one embodiment of the present invention to provide a liquid crystal module in which a bump is not formed at each coupling portion of bezels enclosing the liquid crystal panel, thereby improving the quality of the liquid crystal module.

In order to achieve the above described object, according to an aspect of at least one embodiment of the present invention, there is provided a liquid crystal module, comprising: a liquid crystal panel; a rectangular frame including an upper bezel, a lower bezel, a left bezel and a right bezel which are coupled to each other and enclosing four peripheral edges of the liquid crystal panel, wherein a rib is disposed at a rear side of each coupling portion between adjacent bezels to prevent the adjacent bezels which are coupled to each other from falling down inwardly.

The liquid crystal module may further comprise a cell guide being comprised of synthetic resin and supporting the liquid crystal panel, the rib may be integrally formed on a portion of the cell guide, the portion facing the rear side of each coupling portion between the adjacent bezels. The rib may be formed in the cell guide such that an end surface of the liquid crystal panel abuts against a side surface of the rib to position the liquid crystal panel.

In the liquid crystal module configured as described above, the common falling-down preventing rib which is disposed at the rear side of each coupling portion of the bezels prevents the adjacent bezels from falling down inwardly. Even through the bezels have some deformations or distortions, the end portions of the adjacent bezels come level with each other in each coupling portion due to the rib. Therefore, no bump is formed at each coupling portion of the bezels. It makes a good appearance and improves the quality of the liquid crystal module. In addition, a bezel with some deformations or distortions, which cannot be used in the related-art liquid crystal module can be used in the liquid crystal module configured as described above. Yield of the bezels is improved and thus the manufacturing cost can be reduced. Further, since the falling-down preventing ribs are provided, it is possible to increase a tolerance of a gap between the bezel and a surface of the liquid crystal panel.

The falling-down preventing rib may be separately manufactured and then installed at the rear side of each coupling portion of the bezels. Alternatively, the falling-down preventing rib may be formed integrally with a portion of the cell guide which is made of synthetic resin such that the rib faces to the rear side of the coupling portion of the adjacent bezels. This is advantageous in that it is not necessary to perform the installing operation of the falling-down preventing rib to the cell guide. The rib can be easily formed integrally with the cell guide only by reshaping a portion of a mold of the cell guide. Accordingly, it results in very little cost increase.

In a case where the falling-down preventing rib is formed integrally with the cell guide such that the end surface of the liquid crystal panel abuts against the side surface of the rib to position the liquid crystal panel, additional positioning ribs which are formed on the cell guide in the related-art liquid crystal panel can be omitted.

### BRIEF DESCRIPTION OF THE DRAWINGS

In the accompanying drawings:
Fig. 1 is an exploded perspective view illustrating a liquid crystal module according to an embodiment of the present invention;
Fig. 2 is a front view illustrating the liquid crystal module according to the embodiment;
Fig. 3 is a cross-sectional view illustrating the liquid crystal module according to the embodiment taking along a line A-A in Fig. 2; and
Fig. 4 is a partially-enlarged and exploded perspective view illustrating the liquid crystal module according to the embodiment.

### DETAILED DESCRIPTION OF THE EMBODIMENTS

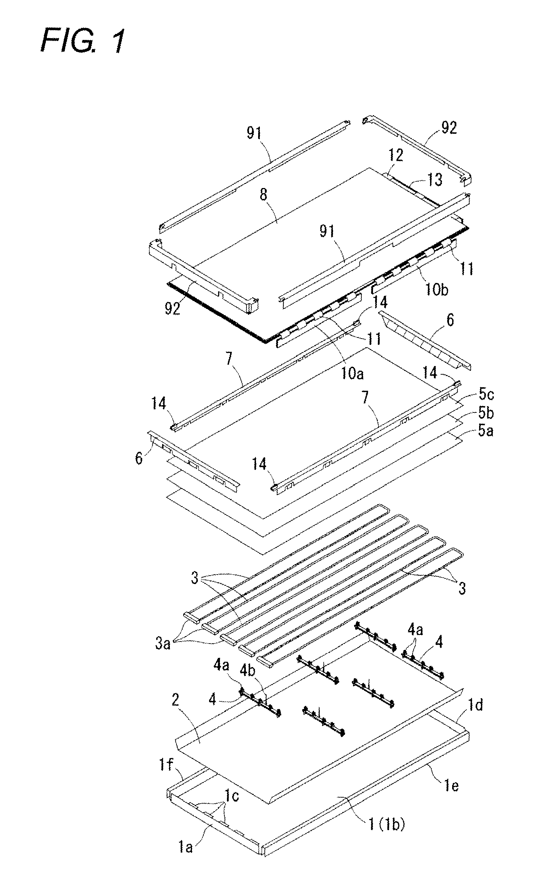

A liquid crystal module shown in Figs. 1 to 3 is a large-sized liquid crystal module to be installed in a liquid crystal television with a large screen. The liquid crystal module includes a shallow box-shaped rear frame 1 made of sheet metal and a light reflective sheet 2 provided inside the rear frame 1. A plurality (five in this embodiment) of U-shaped cold cathode tubes 3 are arranged in parallel with each other on the light reflective sheet 2. The U-shaped cold cathode tubes 3 are supported by a plurality (six in this embodiment) of lamp holders 4.

The lamp holder 4 is provided with 5 holding portions 4a which fixedly hold the U-shaped cold cathode tube 3, as shown in Fig. 1. The four lamp holders 4 holding a center portion of each U-shaped cold cathode tubes 3 are provided with a post 4b supporting optical sheets 5a, 5b and 5c from below to prevent the flexure of the optical sheets 5a, 5b and 5c.

Lamp sockets 3a are attached to an end portion (end portion opposite to an end portion bent in a U-shape) of the U-shaped cold cathode tube 3. The lamp sockets 3a are fixedly fitted into opening portions 1c for fixedly fitting sockets which are provided in a bottom plate 1b of the rear frame 1 along a side plate (left side plate) 1a of the rear frame 1, the number of the opening portions 1c for fixedly fitting sockets corresponding to the number of the lamp sockets. A lead wire (not shown) of the U-shaped cold cathode tube 3 from each of the lamp sockets 3a is drawn out toward a rear side of the rear frame 1. In addition, both ends of the U-shaped cold cathode tube 3 are covered by lamp frames 6 attached to left and right side plates 1a and 1d of the rear frame 1 to reduce a differential in shadow or brightness of the lamp socket 3a, the lamp frames serving as a cell guide.

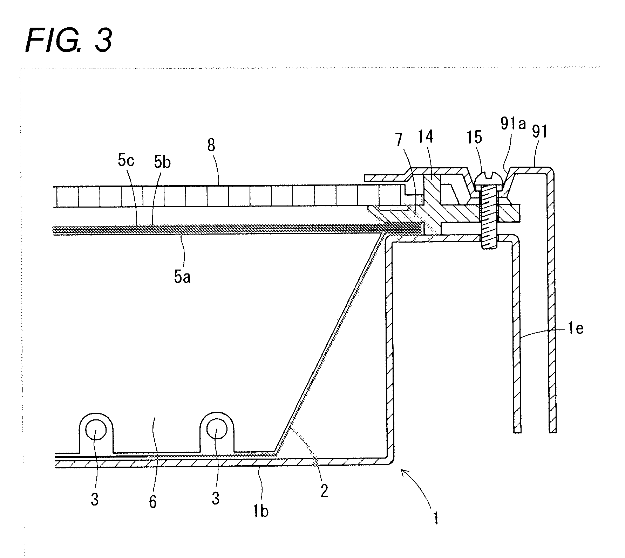

As shown in Figs. 1 and 3, side plates 1e and 1f of the rear frame 1 corresponding to a long side are made of a double side plate which is bent in a reversed U-shape. End edges of three sheets of optical sheets 5a, 5b and 5c corresponding to a long side are arranged on top surfaces of double side plates 1e and 1f, and the optical sheets are pressed by cell guides 7. End edges of the optical sheets 5a, 5b and 5c along a short side are inserted into concave portions (not shown) of the lamp frames 6 which also serve as the cell guide. The optical sheets 5a, 5b and 5c are light diffuser sheets to diffuse the light generated from the U-shaped cold cathode tube 3 and thus uniformly irradiate the light onto the liquid crystal panel 8. Two upper light diffuser sheets 5b and 5c are thin light diffuser sheets, but the lower optical sheet 5a employs an optical sheet (light diffuser plate) of a panel shape, and the optical sheet has a thickness which is difficult to bend. The cell guide 7 will be described in detail below.

Four peripheral edges of the liquid crystal panel (liquid crystal cell) 8 are arranged on the cell guides 7 and the lamp frames 6 which also serve as the cell guide, and two upper and lower long bezels 91 made of sheet metal and two left and right short bezels 92 made of sheet metal are connected to each other in the shape of a rectangular frame so as to enclose the side plates of four peripheral edges of the liquid crystal panel 8 and the side plates of four peripheral edges of the rear frame I, and then are fastened to double side plates 1e and 1f of the rear frame I with screws.

Two-segmented X-wiring boards (X-PCB) 10a and 10b are connected to an edge portion of the end portion of the liquid crystal panel 8 along the long side via a plurality of chip-on-films (COF) 11 on which a source drive IC chip is mounted. The X-wiring boards 10a and 10b are fixed to the outer side of the cell guide 7. In addition, a Y-wiring board (Y-PCB) 13 is connected to the end edge portion of the liquid crystal panel 8 along the short side via a plurality of chip-on-films (COF) 12 on which a gate driver IC chip is mounted. The Y-wiring board 13 is fixed to the outer side of the lamp frame 6.

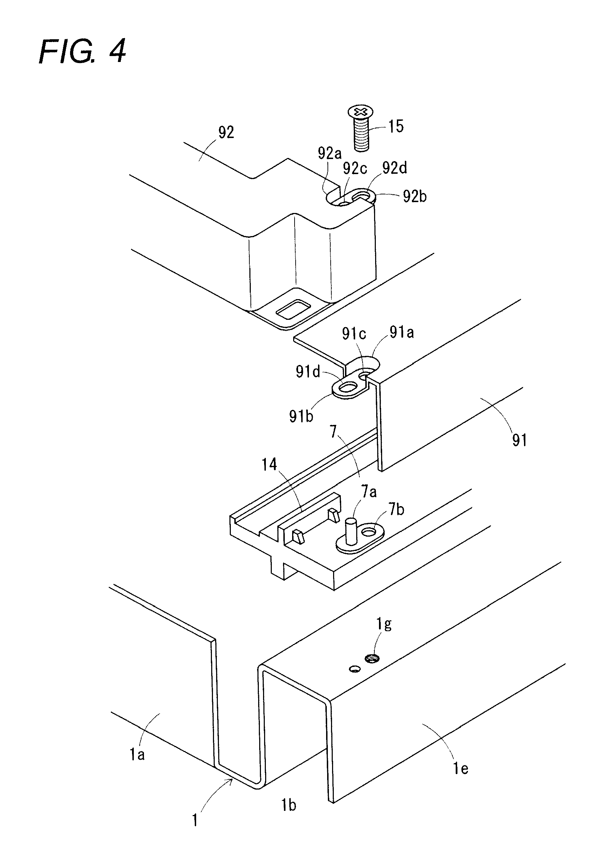

The bezels 91, 92 are made of sheet metal. Each of the upper and lower bezels 91 has a hook-shaped cross section and is formed in the shape of a straight line. Both end portions of each of the upper and lower bezels 91 are provided with a concave portion 91 a having a semi-elliptical shape and a projecting portion 91b having a semi-elliptical shape and protruding from a bottom portion of the concave portion 91a, as shown in Fig. 4. The bottom portion of the concave portion 91a is provided with a circular hole 91c through which a screw penetrates. The projecting portion 91b is provided with an elongated hole 91d into which a positioning pin 7a protruding upwardly from the cell guide 7 is inserted.

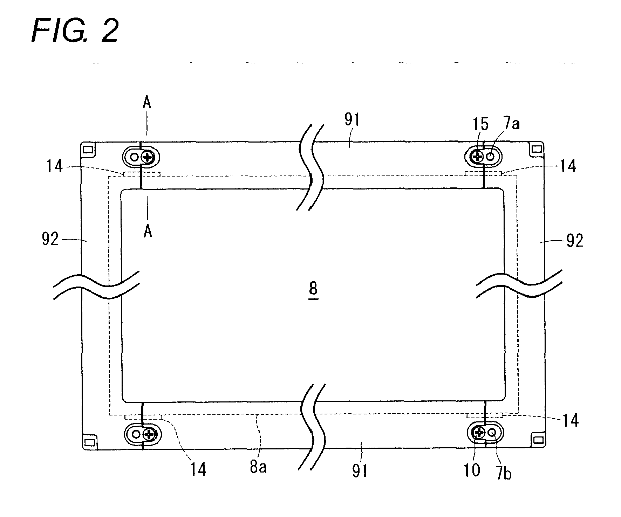

Meanwhile, each of the left and right bezels 92 has a hook-shaped cross section and has a vertically long shape and an approximate U-shape in which both end portions are bent at a right angle, as shown in Figs. 2 and 4. Both end portions of each bezel 92 are provided with a concave portion 92a having a semi-elliptical shape and a projecting portion 92b having a semi-elliptical shape and protruding from a bottom portion of the concave portion 92a, as shown in Fig. 4. The bottom portion of the concave portion 92a is provided with a circular hole 92c into which the pin 7a of the cell guide 7 is inserted. The projecting portion 92b is provided with an elongated hole 92d through which a screw penetrates. The bottom portions of the concave portions 92a of the left and right bezels 92 are shallower in depth by the thickness of the sheet metal than the bottom portions of the concave portions 91a of the upper and lower bezels 91. Accordingly, when overlapping the concave portions 92a and the projecting portions 92b of the left and right bezels 92 with the projecting portions 91b and the concave portions 91a of the upper and lower bezels 91 to couple the bezels 91 and 92 to each other, no bump is formed between the coupled end portions of both bezels 91 and 92.

As shown in Fig. 2, a common falling-down preventing rib 14 is disposed at a rear side of each coupling portion between adjacent bezels to prevent the adjacent bezels which are coupled to each other from falling down inwardly. Since two upper and lower bezels 91 and two left and right bezels are coupled at four coupling portions, four ribs 14 in total are provided at four coupling portions, respectively.
More specifically, the common falling-down preventing rib 14 is integrally formed on a portion of the cell guide 7 (both end portions of the cell guides 7) which is made of synthetic resin. The portion where the rib 14 is formed faces the rear side of the coupling portion between the adjacent bezels. In particular, in this embodiment, as shown in Fig. 3, the falling-down preventing rib 14 is formed integrally with the surface of the cell guide 7 such that the end surface of the liquid crystal panel 8 abuts against the side surface of the falling-down preventing rib 14 to position the liquid crystal panel 8.

The falling-down preventing rib 14 may be separately manufactured and then installed at the rear side of each coupling portion of the bezels 91, 92. As described above, in this embodiment, the falling-down preventing rib 14 is formed integrally with the portion of the cell guide 7 which is made of synthetic resin. This is advantageous in that it is not necessary to perform the installing operation of the falling-down preventing rib 14 to the cell guide 7. The rib 14 can be easily formed integrally with the cell guide 7 only by reshaping a portion of a mold of the cell guide 7. Accordingly, it results in very little cost increase. As shown in Fig. 2, in a case where the falling-down preventing rib 14 is formed integrally with the cell guide 7 such that the end surface of the liquid crystal panel 8 abuts against the side surface of the rib 14 to position the liquid crystal panel 8, additional positioning ribs for positioning the liquid crystal panel in the vertical direction, which are formed on the cell guide in the related-art liquid crystal panel can be omitted. Although not shown, the positioning ribs of the liquid crystal panel 8 are formed on the upper surface of the lamp frames 6 for positioning the liquid crystal panel 8 in the horizontal (left and right) direction.

The coupling of the upper and lower bezels 91 and the left and right bezels 92 is performed as follows. The concave portions 92a and the projecting portions 92b of the left and right bezels 92 is overlapped with the projecting portions 91b and the concave portions 91a of the upper and lower bezels 91. The pin 7a of the cell guide 7 is inserted into the elongated hole 91d for penetrating the pin 7a therethrough and the circular hole 92c from below to position both bezels 91 and 92. The screw 15 (refer to Fig. 4) is inserted into the elongated hole 92d for penetrating the screw therethrough, the circular hole 91c and the screw inserting hole 7b of the cell guide 7. And then the screw 15 is screwed into the screw hole 1g of the double side plates 1e of the rear frame 1. In this way, since the coupling of the bezels 91 and 92 is performed by one screw 15, the number of the screws used in the liquid crystal module is decreased by half, as compared with the configuration in which the bezels are coupled to each other with two bolts (screws) as the liquid crystal display device disclosed in Patent Document 1, thereby reducing component expenses.

In the above-mentioned liquid crystal module, since the common falling-down preventing rib 14 is formed integrally with the cell guide 7 (both end portions of the cell guides 7) made of synthetic resin at each portion facing the rear side of each coupling portion between the bezels 91 and 92, the bezels 91 and 92 which are coupled to each other are prevented from falling down inwardly by the falling-down preventing ribs 14. Even through the bezels 91 and 92 have some deformations or distortions, the end portions of the bezels 91 and 92 come level with each other in each coupling portion due to the ribs 14. Therefore, no bump is formed at each coupling portion of the bezels 91 and 92. It makes a good external appearance and improves the quality of the liquid crystal module. In addition, since a bezel with some deformation or distortion can be used in the liquid crystal module, yield of the bezels is improved. It is possible to reduce the manufacturing cost of the liquid crystal module due to the improved yield and the reduction of the component expensed as described above. Further, since the falling-down preventing ribs 14 are provided, it is possible to increase a tolerance of a gap between the bezels 91 and 92 and the surface of the liquid crystal panel 8.

While the present invention has been shown and described with reference to certain exemplary embodiments thereof, it will be understood by those skilled in the art that various changes in form and details may be made therein without departing from the spirit and scope of the invention as defined by the appended claims.

## Claims

1. A liquid crystal module, comprising:
a liquid crystal panel;
a rectangular frame including an upper bezel, a lower bezel, a left bezel and a right bezel which are coupled to each other and enclosing four peripheral edges of the liquid crystal panel,
wherein a rib is disposed at a rear side of each coupling portion between adjacent bezels to prevent the adjacent bezels which are coupled to each other from falling down inwardly.

2. The liquid crystal module as set forth in claim 1, further comprising a cell guide being comprised of synthetic resin and supporting the liquid crystal panel,
wherein the rib is integrally formed on a portion of the cell guide, the portion facing the rear side of each coupling portion between the adjacent bezels.

3. The liquid crystal module as set forth in claim 2, wherein the rib is formed in the cell guide such that an end surface of the liquid crystal panel abuts against a side surface of the rib to position the liquid crystal panel.
